# EUROPÄISCHE PATENTANMELDUNG

(11) **EP 1 674 602 A1**
(43) Veröffentlichungstag der Anmeldung: **28.06.2006**
(21) Anmeldenummer: 05024170.2
(22) Anmeldetag: 05.11.2005
(51) Int. Cl.: D05B 23/00, B60R 21/16

(54) **Verfahren und Einrichtung zum Einbringen von Nähten in Textilien, insbesondere in technische Textilien**

(30) Priorität: 22.12.2004 DE 102004061843
(71) Anmelder: Car Trim, 08529 Plauen (DE); Konrad Sondermaschinenbau für die nähende Industrie, 85598 Baldham (DE)
(72) Erfinder: Rau, Friedrich, Dr., 08261 Schöneck (DE); Konrad, Adalbert, 85598 Baldham (DE)
(74) Vertreter: von Puttkamer, Nikolaus

(57) **Zusammenfassung**

Die Erfindung betrifft ein Verfahren zum Einbringen von Nähten in Textilien oder Folien, insbesondere in technische Textilien. Ein Gewebe oder eine Folie wird mit einer dem Verlauf der herzustellenden Naht (5) entsprechenden Markierung versehen. Ein eine Kamera (3) aufweisender, verfahrbarer Nähkopf (4) wird zum Einbringen der Naht (5) entlang der Markierung verfahren, wobei mit der Kamera (3) ein Bild des in der Verfahrrichtung gesehen vor dem Nähkopf (4) angeordneten Bereiches der Markierung aufgenommen wird. Dem Bild entsprechende Daten werden an einen Rechner (7) übertragen, der aus diesen Daten Steuersignale erzeugt und zur Steuerung des Nähkopfes (4) beim Verfahren desselben entlang der Naht (5) an denselben überträgt.

## Beschreibung

Die Erfindung betrifft ein Verfahren und eine Einrichtung zum Einbringen von Nähten in Textilien, insbesondere in technische Textilien.

Im Zusammenhang mit der Herstellung von Airbags spielt die Dichtigkeit der Airbags eine entscheidende Rolle. Zur Abdichtung werden (beispielsweise bei der Herstellung von sogenannten Curtain-Airbags) bekannterweise silikonbeschichtete Basisgewebe verwendet, die aufgrund ihrer Silikonbeschichtung eine höhere Dichtigkeit als unbeschichtete Gewebe besitzen. Als zusätzliche Dichtungsmaßnahme werden auch die im Airbag vorhandenen Nähte mit Silikon abgedichtet, um Gasverluste durch die beim Nähen entstehende Perforation des Gewebes zu minimieren. Üblicherweise erfolgt die Herstellung derart abgedichteter Airbags in zwei unabhängigen Arbeitsschritten. Im ersten Arbeitsschritt wird zwischen zwei aus Polyamid bestehende Gewebelagen eine Spur aus essigsäurevernetzendem Silikon eingebracht und werden beide Gewebelagen miteinander verklebt. Die zwischen den Gewebelagen enthaltene Silikonspur entspricht in Form und Lage genau der später einzubringenden Naht. Nach dem Vulkanisieren des Silikons wird der so gewonnene Rohling in eine Nähanlage eingelegt und werden entlang der Silikonspuren die Nähte eingebracht. Hierzu wird der Nähkopf einer automatischen Nähanlage mit der Hilfe von NC-Daten gesteuert.

Das Vernetzen des Silikons dauert unter Normalbedingungen etwa 8 Stunden. Während dieser Zeit nimmt das Polyamid der Gewebelagen Wasser aus der Umgebung auf. Mit dieser Wasseraufnahme ist eine strukturelle Veränderung des Polyamidgewebes verbunden. Die Gewebelagen schrumpfen oder wachsen je nach Feuchtigkeit. Die Lage der zwischen den Gewebelagen enthaltenen Silikonspuren ändert sich entsprechend. Da jedoch die NC-Daten zur Steuerung des Nähkopfes nicht auf die beschriebenen Veränderungen ausgerichtet sind, kann der Fall eintreten, dass die in die Silikonspur eingebrachten Nähte nicht vollständig im Silikon liegen. Dies führt zu fehlerhaften Airbags, die nicht verwendbar sind. Die Ausschussrate ist aus diesem Grunde bei dem beschriebenen bekannten Verfahren zur Herstellung von Airbags relativ hoch.

Die Aufgabe der vorliegenden Erfindung besteht daher darin, ein Verfahren anzugeben, bei dem sichergestellt ist, dass die in die Silikonspuren eingebrachten Nähte jeweils von einem Rand der Silikonspur nach innen in einem vorgegebenen Ausmaß beabstandet sind, sodass Fehler vermieden werden. Durch die vorliegende Erfindung soll auch eine Einrichtung zur Durchführung dieses Verfahrens geschaffen werden.

Diese Aufgabe wird durch ein Verfahren zum Einbringen von Nähten mit den Merkmalen des Patentanspruchs 1 bzw. durch eine Einrichtung mit den Merkmalen des Patentanspruches 14 gelöst.

Der wesentliche Vorteil der vorliegenden Erfindung besteht darin, dass wegen der elektrooptischen Erkennung einer an einem Gewebe vorhandenen Markierung, beispielsweise einer zwischen zwei Gewebelagen angeordneten Silikonspur, sichergestellt wird, dass eine einzubringende Naht exakt zur Markierung ausgerichtet wird, beispielsweise mittig in der Silikonspur verläuft. Auf diese Weise können Fehlerquoten bei der Herstellung von Airbags vermieden bzw. minimiert werden. Dies bedeutet, dass die Airbagproduktion vorteilhafter Weise schneller und kostengünstiger erfolgen kann.

Vorteilhafte Ausgestaltungen der Erfindung gehen aus den Unteransprüchen hervor.

Im folgenden werden die Erfindung und deren Ausgestaltungen im Zusammenhang mit den Figuren näher erläutert. Es zeigen:
Figur 1 in schematischer Darstellung eine Ansicht der unteren Gewebelage eines Curtain-Airbags nach dem Aufbringen von Silikonspuren, wobei die in die Silikonspuren eingebrachten Nähte ebenfalls dargestellt sind;
Figur 2 eine Darstellung zur Erläuterung einer ersten Ausführungsform des erfindungsgemäßen Verfahrens sowie einer entsprechenden Einrichtung zur Durchführung dieses Verfahrens;
Figur 3 eine Darstellung zur Erläuterung einer zweiten Ausführungsform des erfindungsgemäßen Verfahrens sowie einer entsprechenden Einrichtung zur Durchführung dieses Verfahrens; und
Figur 4 eine Darstellung zur Erläuterung einer dritten Ausführungsform des erfindungsgemäßen Verfahrens sowie einer entsprechenden Einrichtung zur Durchführung dieses Verfahrens.

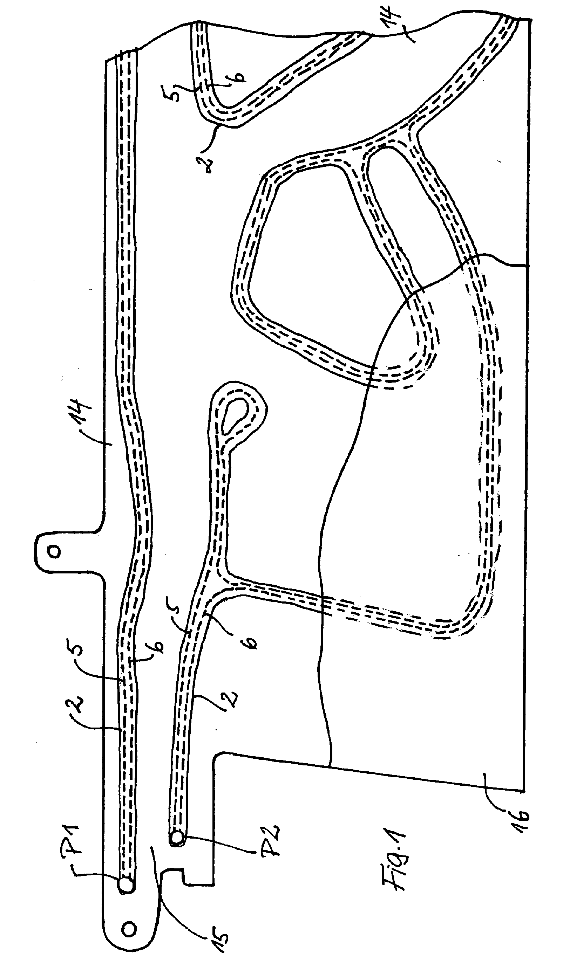

Die Figur 1 zeigt in schematischer Darstellung eine Ansicht von oben auf eine unterer Gewebelage 14 eines an sich bekannten Curtain-Airbags 1, wobei auf der unteren Gewebelage 14 Silikonspuren 2 aufgetragen sind. Die Silikonspuren 2 befinden sich vorzugsweise auf einer Silikonbeschichtung der unteren Gewebelage 14, die vorzugsweise aus Polyamid besteht.

In der Darstellung weist der Curtain-Airbag 1 links oben einen Lufteinlass 15 auf, durch den zur Auslösung Luft explosionsartig eingebracht und dabei zum Aufblasen des Airbags 1 in die zwischen den Silikonspuren 2 gebildete Kanäle eingeblasen wird.

Auf die Anordnung der Figur 1 wird deckungsgleich eine obere Gewebelage 16 aufgelegt, wie dies in der Figur 1 links unten schematisch dargestellt ist. Die Silikonspuren 2 werden dann zwischen der unteren Gewebelage 14 und der oberen Gewebelage 16 flach gedrückt und verbinden beim Vernetzen die obere Gewebelage 16 mit der unteren Gewebelage 14. Die obere Gewebelage 16 besteht vorzugsweise ebenfalls aus Polyamid und weist an ihrer den Silikonspuren 2 zugewandten Seite vorzugsweise ebenfalls eine Silikonbeschichtung auf, die nicht näher dargestellt ist.

Um die Gewebelagen 14, 16 aneinander zu vernähen und um den Airbag 1 dabei im Bereich der Silikonspuren 2 völlig abzudichten, wird in die Silikonspuren 2 wenigstens eine Naht 5 eingebracht, wobei es, wie eingangs bereits erläutert, eine wesentliche Rolle spielt, dass diese Naht 5 exakt den Silikonspuren 2 folgt und stets auf diesen angeordnet ist, d.h. also im Silikon der Silikonspuren 2 verläuft. Zweckmäßigerweise werden zwei oder mehr Nähte 5, 6 in die Silikonspuren 2 eingebracht, die parallel zueinander verlaufen. Vorzugsweise sollen diese Nähte etwa 1 bis 4 mm von der im Falle einer Airbag-Auslösung durch die druckluftbeaufschlagte Seite beabstandet sein. Im Falle dass nur eine Naht vorgesehen wird, kann diese jedoch auch exakt mittig in der Silikonspur 2 verlaufen.

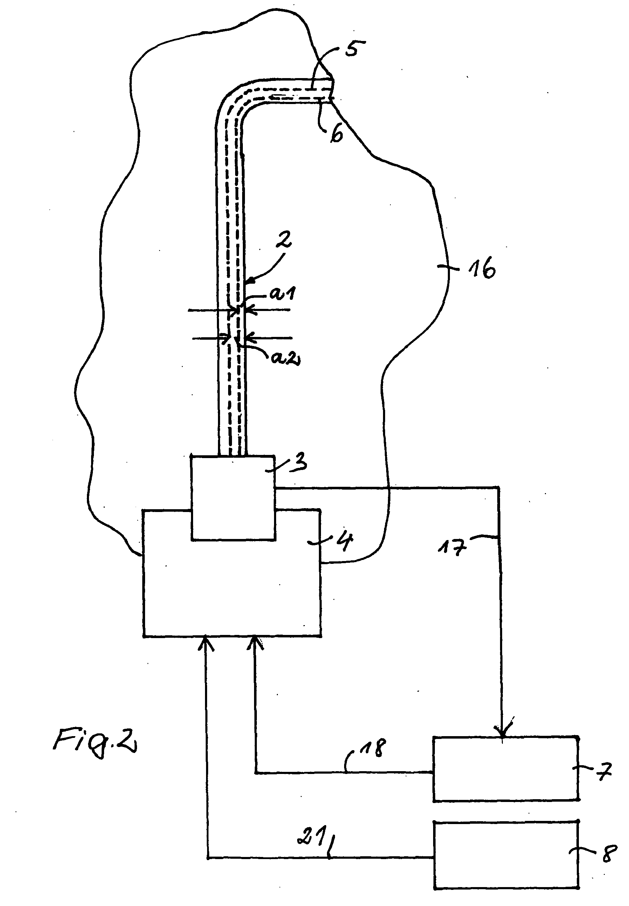

Die Figur 2 zeigt eine erste Ausführungsform des erfindungsgemäßen Verfahrens, bei der der Nähkopf 4 einer nicht näher dargestellten automatischen Nähanlage eine Kamera 3 aufweist, die zusammen mit dem Nähkopf 4 verfahrbar ist und ein Bild desjenigen Bereiches der Silikonspur 2 erzeugt, der in der Verfahrrichtung gesehen vor dem Nähkopf 4 liegt. Bei der Kamera 3 handelt es sich vorzugsweise um eine Videokamera.

Die dem von der Kamera 3 aufgenommenen Bild entsprechenden Daten werden über eine Leitung 17 an einen Rechner 7 übertragen, der aus diesen Daten Steuersignale erzeugt und über eine Leitung 18 an den Nähkopf 4 zur Steuerung desselben überträgt. Aufgrund dieser Steuersignale wird der Nähkopf 4 exakt so gesteuert, dass die von ihm erzeugte Naht 5 bzw. die von ihm erzeugten Nähte 5 und 6 von einem Rand der Silikonspur 2 einen vorgegebenen Abstand a1 bzw. a2 aufweisen. Dabei wird der Nähkopf 4 so gesteuert, dass er genau der Silikonspur 2 folgt, auch wenn diese, wie in der Figur 2 dargestellt, bogenförmig verläuft.

Um den Nähkopf 4 am Beginn einer Nähoperation auf eine Ausgangsposition einer Silikonspur 2, beispielsweise zum Ausgangspunkt P1 oder P2 der Figur 1 zu bringen, kann in einem Speicher 8 ein Urprogramm enthalten sein, das zumindest die einzelnen Ausgangspunkte P1, P2 etc. der jeweiligen Silikonspuren 2, an denen die einzelnen Nähvorgänge beginnen sollen, enthält, sodass der Nähkopf 4 zum Einbringen der Nähte 5, 6 in die Silikonspuren 2 aufeinander folgend zu den einzelnen Ausgangspunkten P1, P2 etc. der einzelnen Silikonspuren 2 verfahren wird. Die Daten des Urprogramms werden vom Speicher 8 über die Leitung 21 zum Nähkopf 4 übertragen.

Um in dem von der Kamera 3 aufgenommenen Bild die Silikonspuren 2 deutlich sichtbar und erkennbar zu machen, die zwischen der oberen Gewebelage 16 und der unteren Gewebelage 14 liegen, ist es denkbar, das Silikonmaterial der Silikonspuren 2 derart einzufärben, dass die einzelnen Silikonspuren 2 durch die oberen Gewebelage 16 hindurch sichtbar und für die Kamera 3 erkennbar sind. Ebenso ist es denkbar, die auf einem Arbeitstisch aufeinanderliegenden Gewebelagen 14 und 16 von der Seite der unteren Gewebelage 14 her im Durchlichtverfahren zu durchleuchten, sodass die Silikonspuren 2 für die Kamera 3 erkennbar werden.

Die Figur 3 zeigt eine weitere Ausführungsform des vorliegenden Verfahrens, bei dem mit der Hilfe einer Kamera 9 zum Vernähen der unteren Gewebelage 14 und der oberen Gewebelage 16 in der zuvor beschriebenen Weise im Bereich der Silikonspuren 2 unmittelbar vor dem Beginn der Nähoperationen ein Bild des gesamten auf einem Arbeitstisch 19 liegenden Airbags 1 zweckmäßigerweise von oben her aufgenommen wird. Die diesem Bild des gesamten Airbags 1 entsprechenden Daten werden über eine Leitung 20 an einen Rechner 10 übertragen, der aus diesen Daten an einer Leitung 21 Steuersignale erzeugt und an den Nähkopf 11 überträgt, der dann die einzelnen Silikonspuren 2 in der bereits erläuterten Weise zum Einbringen der Nähte 5, 6 abfährt.

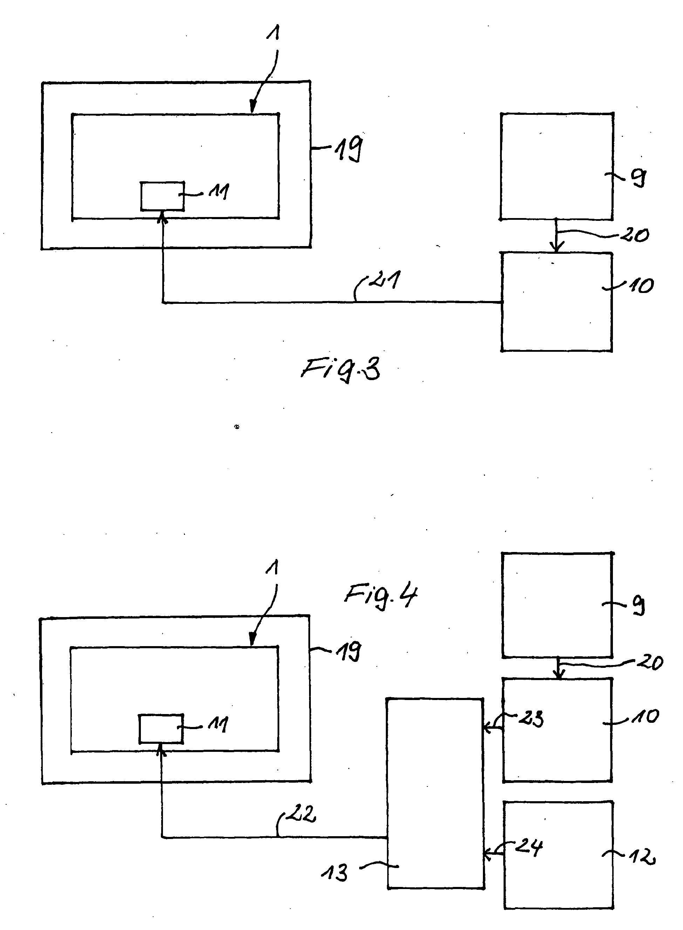

Gemäß Figur 4 ist es auch denkbar, das Verfahren der Figur 3 so zu modifizieren, dass in einem Speicher 12 generell das Muster der Silikonspuren 2 des herzustellenden Airbags 1 in der Form eines Urprogramms gespeichert ist und dass jeweils vor Ausführung einer Nähoperation zum Vernähen der oberen Gewebelage 16 an der unteren Gewebelage 14 eines Airbags 1 mit der Kamera 9 in Echtzeit ein Bild erfasst wird, das die beim Vernetzen der Silikonspuren 2 aufgetretenen Veränderungen bzw. Verschiebungen der Silikonspuren 2, die auf das Schrumpfen bzw. auf Ausdehnungen der Gewebelagen 14, 16 zurückzuführen sind, wie dies eingangs erläutert wurde, erfasst. Die dem in Echtzeit erzeugten Bild des Airbags 1 entsprechenden Daten werden über die Leitung 20 an den Speicher 10 übertragen. Eine Vergleichseinrichtung 13 vergleicht nun diese über die Leitung 20 gelieferten Daten mit den über die Leitung 24 gelieferten Daten des in dem Speicher 12 gespeicherten Urprogramms und erzeugt an einer Leitung 22 fortlaufend entsprechend der beim Vergleich ermittelten Differenz korrigierte Daten des Urprogramms, damit die auf die erwähnten Änderungen zurückzuführenden Verschiebungen der Silikonspuren 2 berücksichtig und die Nähte 5, 6 exakt in die Silikonspuren 2 eingebracht werden.

Bei den Verfahren der Figuren 3 und 4 können die den Ausgangspositionen entsprechenden Positionen P1, P2 etc. ebenfalls, wie im Zusammenhang mit der Figur 2 erläutert, einem Speicher entnommen werden.

In ihrer allgemeinsten Form betrifft die Erfindung das optoelektronische Einbringen von Nähten in wenigstens ein Gewebe und/oder wenigstens eine Folie, wobei das Gewebe oder die Folie eine Markierung aufweist, entlang der wenigstens eine Naht einzubringen ist. Die Markierung wird von einer Kamera aufgenommen, die einem Bild der Markierung entsprechende Daten an einen Rechner überträgt. Der Rechner erzeugt aus diesen Daten Steuerdaten für einen Nähkopf, so dass dieser entlang der Markierung zum Einbringen der Naht verfahren wird.

### Bezugszeichenliste

- 1: Curtain-Airbag
- 2: Silikonspur
- 3: Kamera
- 4: Nähkopf
- 5: Naht
- 6: Naht
- 7: Rechner
- 8: Speicher
- 9: Kamera
- 10: Rechner
- 11: Nähkopf
- 12: Speicher
- 14: Gewebelage
- 15: Lufteinlass
- 16: Gewebelage
- 17: Leitung
- 18: Leitung
- 19: Arbeitstisch
- 20: Leitung
- 21: Leitung
- 22: Leitung
- 23: Leitung
- 24: Leitung

- a1: Abstand
- a2: Abstand
- P1: Ausgangspunkt
- P2: Ausgangspunkt

## Patentansprüche

1. Verfahren zum Einbringen von Nähten in Textilien und/oder Folien, insbesondere in technische Textilien, **dadurch gekennzeichnet, dass** ein Nähkopf (4) entlang einer an einem Gewebe oder einer Folie angebrachten Markierung verfahren wird, wobei das Verfahren des Nähkopfes (4) mit der Hilfe von Steuersignalen erfolgt, die von einem Rechner (7) aus Daten errechnet werden, die einem von einer Kamera (3) aufgenommenen Bild der Markierung entsprechen.

2. Verfahren nach Anspruch 1, **dadurch gekennzeichnet, dass** das Gewebe oder die Folie mit einer dem Verlauf der herzustellenden Naht (5) entsprechenden Markierung versehen wird, dass ein eine Kamera (3) aufweisender, verfahrbarer Nähkopf (4) zum Einbringen der Naht (5) entlang der Markierung verfahren wird, wobei mit der Kamera (3) ein Bild des in der Verfahrrichtung gesehen vor dem Nähkopf (4) angeordneten Bereiches der Markierung aufgenommen wird und dem Bild entsprechende Daten an einen Rechner (7) übertragen werden, der aus diesen Daten Steuersignale erzeugt und zur Steuerung des Nähkopfes (4) beim Verfahren desselben entlang der Naht (5) an denselben überträgt.

3. Verfahren nach Anspruch 2, **dadurch gekennzeichnet, dass** insbesondere zur Herstellung von Airbags auf, einer ersten Gewebelage (14) wenigstens eine Spur (2) eines Dichtungsmaterials aufgebracht wird, dass auf die erste Gewebelage (14) eine zweite Gewebelage (16) aufgelegt wird, und dass zum Vernähen der ersten Gewebelage (14) an der zweiten Gewebelage (16) entlang der Spur (2) durch Einbringen wenigstens einer Naht (5) in den Bereich der Spur (2) der Nähkopf (4) entlang der Spur (2) verfahren wird, wobei die Kamera (3) die Spur (2) als Markierung erfasst und dem Bild dieser Spur (2) entsprechende Daten an den Rechner (7) überträgt.

4. Verfahren nach Anspruch 1, **dadurch gekennzeichnet, dass** insbesondere zur Herstellung von Airbags mit der Hilfe der Kamera (9) ein Bild einer auf einem Arbeitstisch (19) liegenden ersten Gewebelage (14) mit einer darauf befindlichen zweiten Gewebelage (16) und wenigstens einer dazwischen als Markierung angeordneten Spur (2) eines Dichtungsmaterials aufgenommen wird, und dass dem Bild entsprechende Daten an den Rechner (10) übertragen werden, der aus diesen Daten Steuersignale erzeugt und an den Nähkopf (11) überträgt, der zum Einbringen wenigstens einer Naht (5) in die Spur (2) entlang dieser verfahren wird.

5. Verfahren nach Anspruch 1, **dadurch gekennzeichnet, dass** insbesondere zur Herstellung von Airbags die Kamera (9) ein Bild einer auf einem Arbeitstisch (19) fixierten ersten Gewebelage (14) mit einer darauf angeordneten zweiten Gewebelage (16) und wenigstens einer dazwischen als Markierung angeordneten Spur (2) eines Dichtungsmaterials erzeugt und diesem Bild entsprechende Daten an den Rechner (10) überträgt, der aus diesen Daten die Steuersignale erzeugt und an eine Vergleichseinrichtung (13) überträgt, die diese mit entsprechenden Steuersignalen aus einem Speicher (12) vergleicht, die einem vorgegebenen Bild der Spur (2) einer vorgegebenen Anordnung aus einer ersten Gewebelage (14), einer darauf befindlichen zweiten Gewebelage (16) und dazwischen angeordneten Spur (2) entspricht, und dass die Vergleichseinrichtung (13) entsprechend der Abweichung der Steuerdaten des Rechners (10) und der Steuerdaten des Speichers (20) korrigierte Steuerdaten für den Nähkopf (11) erzeugt und an den Nähkopf (11) überträgt, der zum Einbringen wenigstens einer Naht (5) in die Spur (2) entlang dieser verfahren wird.

6. Verfahren nach einem der Ansprüche 3 bis 5, **dadurch gekennzeichnet, dass** als Dichtungsmaterial zur Bildung der Spur (2) Silikon verwendet wird.

7. Verfahren nach einem der Ansprüche 3 bis 6, **dadurch gekennzeichnet, dass** die der zweiten Gewebelage (16) zugewandte Seite der ersten Gewebelage (14) und/oder die der ersten Gewebelage (14) zugewandte Seite der zweiten Gewebelage (16) vor dem Aufbringen der Spur (2) mit einer Silikonbeschichtung versehen werden.

8. Verfahren nach einem der Ansprüche 3 bis 7, **dadurch gekennzeichnet, dass** die erste Gewebelage (14) und/oder die zweite Gewebelage (16) aus Polyamid bestehen.

9. Verfahren nach einem der Ansprüche 3 bis 8, **dadurch gekennzeichnet, dass** die Steuersignale vom Rechner (7; 10) so erzeugt werden, dass die Naht (5) durch einen Abstand (a2) von einem Rand der Spur (2) beabstandet in die Spur (2) und die erste Gewebelage (14) und die zweite Gewebelage (16) eingebracht wird.

10. Verfahren nach Anspruch 9, **dadurch gekennzeichnet, dass** die Steuersignale so erzeugt werden, dass durch den Nähkopf (4) in die Spur (2), die erste Gewebelage (14) und die zweite Gewebelage (16) von einem Rand der Spur (2) durch einen Abstand (a1) beabstandet wenigstens eine weitere Naht (6) eingebracht wird.

11. Verfahren nach einem der Ansprüche 3 bis 10, **dadurch gekennzeichnet, dass** das Material der Spur (2) derart eingefärbt wird, dass die Spur (2) durch die zweite Gewebelage (16) hindurch für die Kamera (3) sichtbar wird.

12. Verfahren nach einem der Ansprüche 3 bis 10, **dadurch gekennzeichnet, dass** die Spur (2) für die Kamera (3) **dadurch** sichtbar gemacht wird, dass die erste Gewebelage (14) und die zweite Gewebelage (16) von der Seite der ersten Gewebelage (14) her im Durchlichtverfahren beleuchtet werden.

13. Verfahren nach einem der Ansprüche 3 bis 12, **dadurch gekennzeichnet, dass** in einem weiteren Speicher (8) ein Urprogramm gespeichert ist, das vorgegebenen Ausgangspunkten (P1, P2) einzelner Spuren (2) entsprechende Steuersignale enthält, durch die der Nähkopf (4, 11) zu einzelnen Ausgangspunkten (P1, P2) zum Beginn jeweils einer Nähoperation verfahren wird.

14. Einrichtung zur Durchführung des Verfahrens nach einem der Ansprüche 1 bis 3, **dadurch gekennzeichnet, dass** sie einen verfahrbaren Nähkopf (4) mit einer fest daran montierten Kamera (3) und einen Rechner (7) umfasst, der aus den einem von der Kamera (3) aufgenommenen Bild entsprechenden Daten Steuersignale zur Steuerung des Nähkopfes (4) erzeugt, um diesen entlang der von der Kamera (3) aufgenommenen Markierung zu verfahren.

15. Einrichtung zur Durchführung des Verfahrens nach einem der Ansprüche 4 bis 13, **dadurch gekennzeichnet, dass** eine Kamera (9) zur Aufnahme eines Bildes in Echtzeit der Markierung eines auf einem Arbeitstisch (19) fixierten Gewebes (1) oder einer Folie und ein Rechner (10) vorgesehen sind, der aus den einem von der Kamera (9) aufgenommenen Bild entsprechenden Daten Steuersignale zur Steuerung des Nähkopfes (11) entlang der Markierung erzeugt.

16. Einrichtung nach Anspruch 15, **dadurch gekennzeichnet, dass** eine Vergleichseinrichtung (13) vorgesehen ist, die die Steuersignale des Rechners (10) mit Steuersignalen eines in einem Speicher (12) gespeicherten Urprogramms vergleicht, die den Daten eines Bildes eines vorgegebenen Gewebes (1) oder einer vorgegebenen Folie entsprechen, und dass die Vergleichseinrichtung (13) entsprechend der Abweichung der Steuerdaten des Speichers (12) von den Steuerdaten des Rechners (10) korrigierte Steuerdaten zur Steuerung des Nähkopfes (11) entlang der Markierung erzeugt.

17. Einrichtung nach einem der Ansprüche 14 bis 16, **dadurch gekennzeichnet, dass** in einem weiteren Speicher (8) Steuersignale gespeichert sind, die vorbestimmten Ausgangspunkten (P1, P2) bestimmter Spuren (2) entsprechen und durch die der Nähkopf (4, 11) zu einzelnen Ausgangspunkten (P1, P2) zum Beginn jeweils einer Nähoperation verfahrbar ist.
